# EUROPEAN PATENT APPLICATION

(11) **EP 4 711 283 A1**
(43) Date of publication of application: **18.03.2026**
(21) Application number: 24382980.1
(22) Date of filing: 13.09.2024
(51) Int. Cl.: B64U 20/87, B64U 10/16, B64U 30/16, B64U 30/21, B64U 30/29, B64U 40/10, B64U 101/26, B64U 101/30

(54) **UNMANNED AERIAL VEHICLE FOR LINEAL INFRASTRUCTURE INSPECTION**

(71) Applicant: Fuvex Civil, SL, 31500 Tudela (ES)
(72) Inventor: CASTELLANO ALDAVE, Jesús Carlos, 31512 Fontellas (ES); VILLADANGOS ALONSO, Jesús, 31006 Pamplona (ES); ASTRAIN ESCOLA, José Javier, 31010 Barañain (ES)
(74) Representative: Torner, Juncosa I Associats, SL

(57) **Abstract**

Unmanned aerial vehicle for lineal infrastructure inspection comprising an electric battery (40), a frame (10) supporting at least three propellers (30) surrounding one central support defined in a central position of the frame (10); a control unit (50) configured to individually control the thrust of each propeller (30); and at least one optical sensor (60) for inspecting lineal infrastructures; each propeller (30) comprising one electric motor (31) connected to the electric battery (40) and one rotor (32) rotative around a central axis oriented in a third direction (Z); wherein at least the electric battery (40) and the at least one optical sensor (60), are supported in a support structure (20) hanging from the central support of the frame through a first swivel joint (21) rotative freely around an axis parallel to the first direction (X) and a second swivel joint (22) rotative freely around an axis parallel to the second direction (Y).

## Description

### Technical field

The present invention is directed towards an unmanned aerial vehicle for lineal infrastructure inspection, such electric lines, pipelines, railways, etc.

The proposed unmanned aerial vehicle is a vertical take-off and landing multicopter propelled by several individual electric propellers with a lifting power output individually controlled, which is a type of drone.

The proposed multicopter includes features intended to passively increase the stability of the optical sensors used for the inspection, particularly in windy conditions, and to reduce the energy consumption to increase the operational range of the unmanned aerial vehicle.

### Background of the Invention

The unmanned aerial vehicles, in particular multi-copter drones, are already known in the state of the art.

The most common multi-copter drones include a frame supporting the propellers, the battery and also is very common the inclusion of an optic sensor such a camera. In those common drones, the individual control of the thrust of each propeller produces the tilting of the frame creating a forward, backward or lateral thrust which can propel the drone in certain intended direction, or which can compensate a wind to remain stable, but producing the tilting of the entire vehicle, including the optical sensor. This makes difficult a precise inspection of a target area with the optic sensor, in particular in windy conditions, and often requires the inclusion of an expensive and energy consuming automated stabilized to support the optical sensor, reducing the range of the vehicle and increasing its cost.

The present invention solves the above and other problems.

### Description of the Invention

The present invention concerns to an unmanned aerial vehicle for lineal infrastructure inspection, as defined in claim 1.

The proposed unmanned aerial vehicle comprises, in a manner already known in the state of the art:
a frame supporting at least three propellers surrounding one central support defined in a central position of the frame, the frame defining a first direction X and a second direction Y, the first and second directions X and Y being orthogonal to each other;
an electric battery;
a control unit configured to individually control the thrust of each propeller;
at least one optical sensor for inspecting lineal infrastructures;
wherein each propeller comprises one electric motor connected to the electric battery and one rotor rotative around a central axis oriented in a third direction Z orthogonal to the first and second directions X and Y;

According to the above, the frame supports at least three propellers surrounding a central support, but the propellers attached to the frame can be four, five, six, seven, eight or more.

Each propeller comprises an electric motor and a rotor forming an airscrew, for example rotors comprising two, three, four, five or six radial blades. The independent control of the power output of each electric motor, controlled by the control unit, allows an individual control of the thrust produced by each propeller. Preferably, the rotors of all the propellers are coplanar on a plane perpendicular to the axis of rotation of the rotors or are contained in several parallel planes, each plane being perpendicular to the axis of rotation of the rotors.

The individual control of the thrust of each propeller allows control of ascent, descent or hovering of the vehicle, maintaining the frame horizontal with the axis of the rotors being vertical, and also allows the inclination of the frame by increasing the thrust of the propellers on one halve of the vehicle and/or by reducing the thrust of the propellers on the other halve of the vehicle. The inclination of the frame produces the inclination of the axis of the rotors, creating a forward or backward propulsion vector in the first direction X or sideways in the second direction Y. This propulsion vector can be used to produce the advance of the vehicle in any of those directions, or to stabilize the vehicle against the wind.

Irrespective of the number of propellers, the central support is located in a central position relative to the propeller which are spaced apart from the central support in the first direction X, in the second direction Y, and/or in both the first and second directions X and Y in which the frame extends. The central support is preferably defined in the center of gravity of the frame with the propellers, being the propellers for example distributed evenly or symmetrically around the central support.

The frame is a flattened frame extending in both the first and second directions X and Y, for example comprising arms extending radially from the central support towards each propeller or comprising intersecting bars forming a matrix, said bars passing through the central support and through all the propellers.

Preferably the frame is made of a lightweight and resistant material, such aluminum and/or fiber carbon.

The present invention proposes, in a manner not known, the following:
At least the electric battery and the at least one optical sensor, are supported in a support structure hanging from the central support of the frame through a first swivel joint rotative freely around an axis parallel to the first direction X and through a second swivel joint rotative freely around an axis parallel to the second direction Y.

According to the above, this support structure carries most of the weight of the unmanned aerial vehicle, since the batteries constitute the heaviest part of the vehicle, and also carries the payload, which in this case is the at least one optical sensor.

Because the support structure is hanging from the frame, and because the most of the weight of the vehicle is connected to the frame through the first and second swivel joints free to rotate around axis parallel to the first and second directions X and Y, the unmanned aerial vehicle can easily and rapidly modify the inclination of its lightweight frame, for example to stabilize the vehicle in response to winds or gusty winds, without modifying the inclination of the weight supported by the support structure.

The weight produces inertia which makes it difficult to change the position of said weight, either to move for example from a horizontal position of the frame to a tilted position, or to stop the tilting movement of the frame at a particular angle. By disconnecting the tilting of the frame from the tilting of the heaviest components of the vehicle thanks to the first and second swivel joints, the frame can tilt faster and more accurately, consuming less energy.

This allows better control of vehicle stability, particularly in gusty wind conditions.

In addition, the inertia provided by the weight of the battery also stabilizes the position of the support structure against said movements of the frame, and therefore reduces its movements, thus improving the stability of at least one optical sensor in a natural way, without the need for heavy and expensive stabilizers.

The stability of the at least one optical sensor is essential for the inspection of lineal infrastructure, and for other potential uses of this vehicle, because the optical sensors need to obtain a stable image of such infrastructure, in some cases zooming into particular regions to be inspected in detail from far away.

The invention also proposes, as an optional embodiment, to include at least one wing, extended in the second direction Y, attached to the rest of the vehicle through a rotative joint which is free to rotate about an axis parallel to the second direction Y between two angular limit positions.

Said at least one wing will orient naturally depending on the direction of the incident airflow to reduce its exposed surface to the minimum.

The two angular limit positions are spaced apart at least 90°, comprising one liftoff position, in which the flats are oriented by gravity, and one advance position in which the at least one wing is oriented horizontally by an airstream produced by the advancement of the unmanned aerial vehicle forwards in the first direction X, providing lift to the vehicle, reducing the energy consumption of the vehicle and increasing its range.

The at least one wing can be several wings, preferably disposed symmetrically on both sides of a central vertical plane of the vehicle containing the first and third directions X and Z.

Preferably, the at least one wing can be attached to at least one wing support included in the frame. When advancing, the frame of the vehicle is tilted, for example between 15° and 30° or between 18° and 25°, having the front portion thereof (in the first direction X) lower than the back portion thereof. Therefore, according to this embodiment, when in the advance position, the wings remain horizontal while the frame is tilted, the wings forming an angle with the frame equal to the inclination of the tilted frame in regard to a horizontal plane.

According to an alternative embodiment, the at least one wing is attached to at least one wing support included in the support structure, which is not tilted during the advancement of the vehicle. In this case, the weight of the at least one wing is not included in the frame.

In this case, the at least one wing can be located above or below the frame, attached to an extension of the support structure extending above or below the frame to reduce the interference of the airstream produced by the propellers with the at least one wing.

When the at least one wing are several wings and those wings are attached to the support structure, some wings can be attached above the frame, and some can be attached below the frame.

Regardless of whether the at least one wing is attached to the frame or to the support structure, the frame can define a central region free of propellers, maintaining a region above and below said central region free of the airstream produced by the propellers, allowing the at least one wing to be positioned in, above or below this central region.

It will be understood that references to geometric position, such as parallel, perpendicular, tangent, etc. allow deviations up to ± 5° from the theoretical position defined by this nomenclature.

### Brief description of the Figures

The foregoing and other advantages and features will be more fully understood from the following detailed description of an embodiment with reference to the accompanying drawings, to be taken in an illustrative and non-limitative manner, in which:

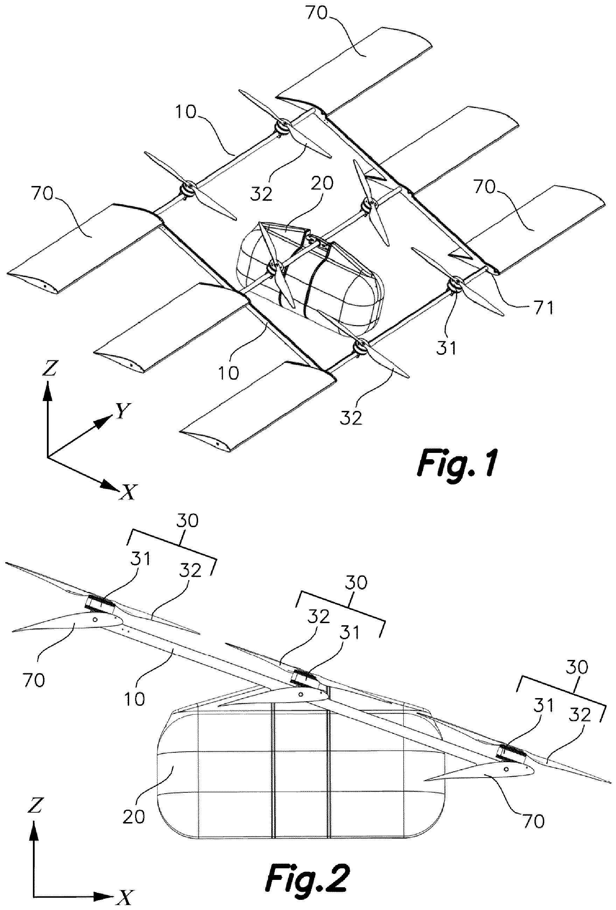

Fig. 1 shows a perspective view of the unmanned vehicle in the advance position, in which the frame and the propellers attached thereto are tilted regards a horizontal plane, and the wings are oriented mostly horizontally, according to a first embodiment comprising six propellers in which the wings are attached to the frame there around.
Fig. 2 shows the same than Fig. 1. but in a lateral view.

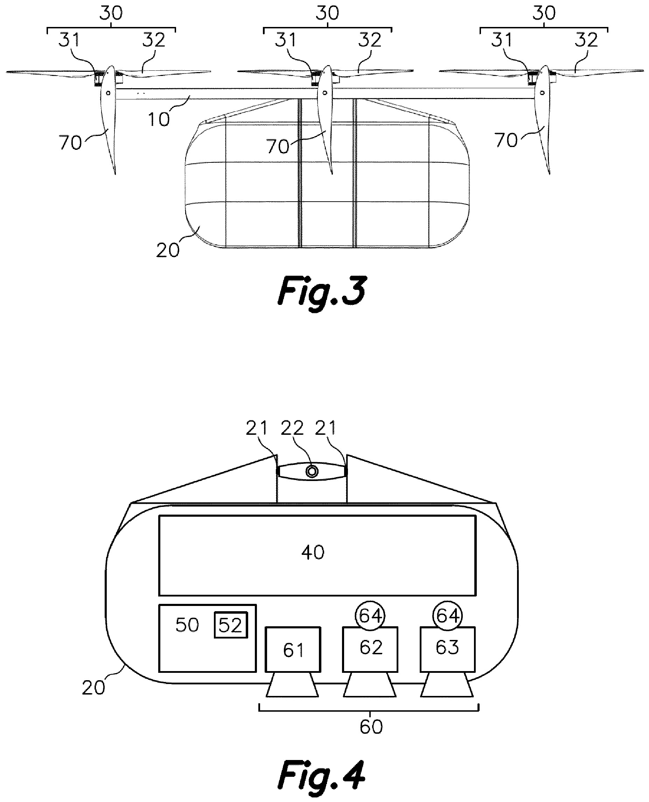

Fig. 3 shows the same unmanned vehicle in lateral view shown in Fig. 2 but in the liftoff position, in which the frame and the propellers are mostly horizontal, and the wings are mostly vertical.
Fig. 4 shows a schematic view of the support structure showing the components contained therein.

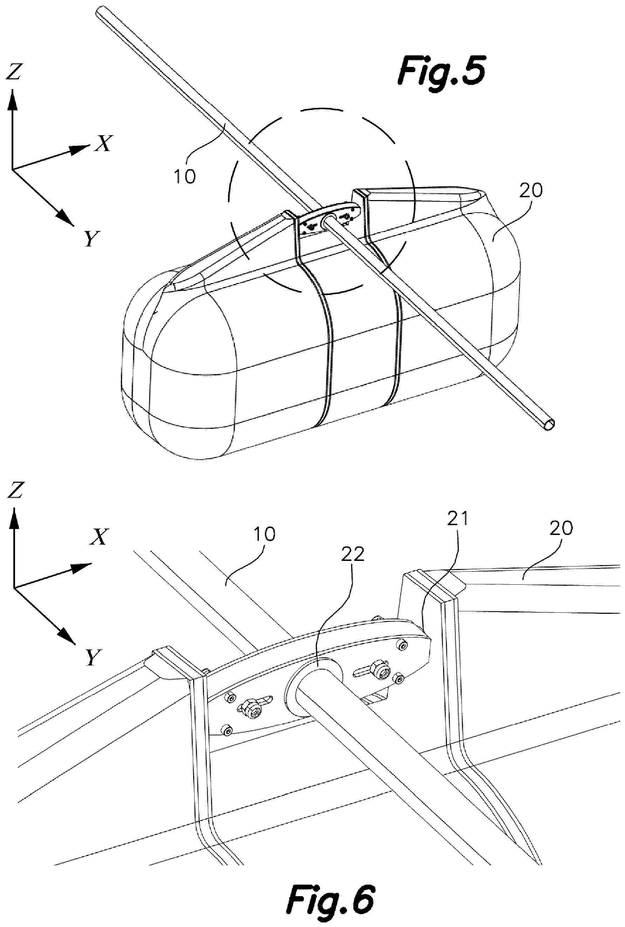

Fig. 5 shows a view of the support structure connected to a portion of the frame through the first and second swivel joints.
Fig. 6 shows a zoomed view of the first and second swivel joints, corresponding to the area encircled in the Fig. 5.

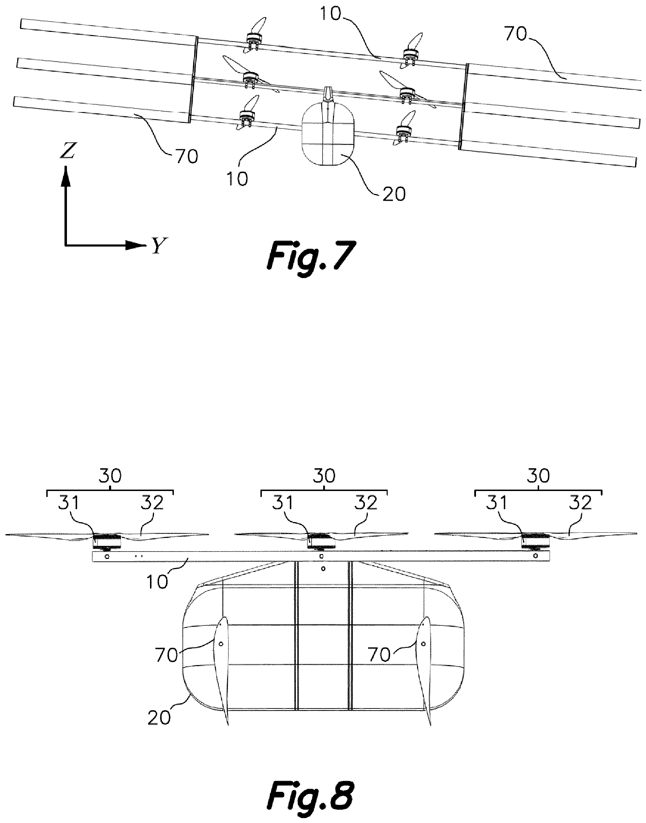

Fig. 7 shows a front view of the same unmanned vehicle shown in Fig. 1 wherein the frame is not only tilted forwards but also laterally, for example to generate a lateral translation movement or to compensate for a lateral wind.
Fig. 8 shows a lateral view of the unmanned vehicle similar to that shown in Fig. 1 but according to an alternative embodiment wherein the wings are attached directly to the support structure.

### Detailed Description of the Invention and of particular embodiments

The present invention is referred to an unmanned aerial vehicle for lineal infrastructure inspection.

The proposed vehicle comprises a frame 10 comprising at least three propellers 30 surrounding one central support. The central support is defined in a central position in regards the surrounding propellers, preferably in the center of gravity, the propellers 30 being spaced apart from the central support in a first direction X and in a second direction Y orthogonal to each other.

The at least three propellers are preferably four, five, six, seven, eight or more propellers 30.

Each propeller 30 comprises one electric motor 31 and one rotor 32 rotative around a central axis oriented in a third direction Z orthogonal to the first and second directions X and Y, the position and orientation of each propeller being fixed with respect to the frame 30.

The unmanned aerial vehicle further comprises an electric battery 40 connected to each of the electric motors 31, a control unit 50 configured to individually control the thrust of each propeller 30, and at least one optical sensor 60 for inspecting lineal infrastructures.

According to the proposed invention, the at least the electric battery 40 and the at least one optical sensor 60, are supported in a support structure 20 hanging from the central support of the frame 10 through a first swivel joint 21 rotative freely around an axis parallel to the first direction X and a second swivel joint 22 rotative freely around an axis parallel to the second direction Y.

The unmanned aerial vehicle can further include at least one wing 70, or preferably two or several symmetric wings. Each wing 70 is elongated in the second direction Y and is attached to the rest of the unmanned aerial vehicle through a rotative joint 71, allowing the free rotation of the wing 70 about an axis parallel to the second direction Y between two angular limit positions.

The two angular limit positions are preferably spaced apart at least 90°, comprising one liftoff position, in which the at least one wing 70 is oriented by gravity in vertical orientation, minimizing their exposure to vertical air flow, and one advance position in which the at least one wing 70 is oriented horizontally by an airstream produced by the advancement of the unmanned aerial vehicle in the first direction X, minimizing their exposure to a horizontal air flow.

The at least one wing, can be several wings, for example pairs of symmetric wings positioned on opposed lateral sides of a central vertical plane defined by the first and third directions X and Z.

Preferably, the at least one wing 70 is attached to the frame 10 or is alternatively attached to the support structure 20.

In any case, it is preferred to define a central region of the frame free of propellers, positioning the at least one wing 70 in, above or below this central region.

Also, the control unit 50 can be attached to the support structure 20, further reducing the weight supported by the frame 10.

The frame 10 can include a tilt sensor in communication with the control unit 50, in order to determine the orientation of the frame with precision. Thanks to this tilt sensor the control unit can receive a feedback information of the movement of the frame produced by the variation in the thrust of the propellers or produced by a wind impacting the vehicle, allowing for a more precise and accurate control of the vehicle.

Also the support structure 20 may include a tilt sensor 52 in communication with the control unit 50. In this manner, the control unit can also determine the position and the movements produced by the support structure due to inertia thereof of due to the impact of wind, allowing the control unit to execute control orders to the propellers to reduce or stabilize the movement of the support structure 10.

The at least one optical sensor 60 may comprise at least one LIDAR sensor 61 and at least one thermal camera 62.

The LIDAR sensor (acronym of "laser imaging, detection, and ranging") is a sensor which creates a precise 3D image of a surface by targeting the surface with a laser and measuring the time for the reflected light to return to the receiver.

The thermal camera (also called an infrared camera or thermal imaging camera, thermal) is a device sensible to infrared (IR) radiation, typically with wavelengths from about 1,000 nm (1 micrometre or µm) to about 14,000 nm (14 µm), which creates an image in visible light showing with different colors different temperatures of the surface of the objects analyzed.

The combination of the images obtained with the LIDAR sensor and with the thermal camera creates a precise representation of the lineal infrastructure to be analyzed, showing hotspots indicative of a past, present or future potential maintenance problem or failure points.

The at least one optical sensor 60 may further include at least one visible light camera 63, to provide additional information which could be also indicative of a problem or a maintenance opportunity of the infrastructure. For example, a discoloration or a darkening of the analyzed surface may be indicative of a past, present or future potential maintenance problem or failure points.

The at least one thermal camera 62 or at least one thermal camera 62 and the at least one visible light camera 63 may be supported in an automated orientable support 64 and/or in an automated stabilization support 64, to produce a further stabilization or to direct the cameras towards a target area to be analyzed.

The support structure can further support a flywheel rotative around an axis parallel to the third direction Z, to provide further stability to the support structure 20. Such flywheel can be connected to an electric motor connected to the battery or can be accelerated before the start of the flight.

Also, the flywheel can comprise the battery, mounted in a rotative support and connected to the rest of the vehicle through a rotative electric connection, to increase the inertia of the flywheel with a minimal increase in the overall weight of the vehicle.

## Claims

1. Unmanned aerial vehicle for lineal infrastructure inspection comprising:
a frame (10) supporting at least three propellers (30) surrounding one central support defined in a central position of the frame (10), the frame (10) defining a first direction (X) and a second direction (Y) orthogonal to each other;
an electric battery (40);
a control unit (50) configured to individually control the thrust of each propeller (30);
at least one optical sensor (60) for inspecting lineal infrastructures;
wherein each propeller (30) comprises one electric motor (31) connected to the electric battery (40) and one rotor (32) rotative around a central axis oriented in a third direction (Z) orthogonal to the first and second directions (X and Y);
**characterized in that**
at least the electric battery (40) and the at least one optical sensor (60), are supported in a support structure (20) hanging from the central support of the frame through a first swivel joint (21) rotative freely around an axis parallel to the first direction (X) and a second swivel joint (22) rotative freely around an axis parallel to the second direction (Y).

2. The unmanned aerial vehicle according to claim 1 wherein the unmanned aerial vehicle further includes at least one wing (70), extended in the second direction (Y), attached to the rest of the unmanned aerial vehicle through a rotative joint (71) which is free to rotate about an axis parallel to the second direction (Y) between two angular limit positions.

3. The unmanned aerial vehicle according to claim 2 wherein the two angular limit positions are spaced apart at least 90°, comprising one liftoff position, in which the at least one wing (70) is oriented by gravity, and one advance position in which the at least one wing (70) is oriented by an airstream produced by the advancement of the unmanned aerial vehicle in the first direction (X).

4. The unmanned aerial vehicle according to claim 2 or 3 wherein the at least one wing (70) is attached to the frame (10).

5. The unmanned aerial vehicle according to claim 2 or 3 wherein the at least one wing (70) is attached to the support structure (20).

6. The unmanned aerial vehicle according to claim 4 or 5 wherein the frame (10) defines a central region free of propellers and the at least one wing (70) is positioned in, above or below this central region.

7. The unmanned aerial vehicle according to any preceding claim wherein also the control unit (50) is attached to the support structure (20).

8. The unmanned aerial vehicle according to claim 7 wherein the frame (10) also includes a tilt sensor in communication with the control unit (50).

9. The unmanned aerial vehicle according to claim 8 wherein the support structure (20) also includes a tilt sensor (52) in communication with the control unit (50).

10. The unmanned aerial vehicle according to any preceding claim wherein the at least one optical sensor (60) includes at least one LIDAR sensor (61) and at least one thermal camera (62).

11. The unmanned aerial vehicle according to claim 10 wherein the at least one optical sensor (60) further includes at least one visible light camera (63).

12. The unmanned aerial vehicle according to claim 10 or 11 wherein the at least one thermal camera (62) or at least one thermal camera (62) and the at least one visible light camera (63) is/are supported in an automated orientable support (64) and/or in an automated stabilization support (64).

13. The unmanned aerial vehicle according to any preceding claim wherein the support structure further supports a flywheel rotative around an axis parallel to the third direction (Z).
